Europäisches Patentamt

**European Patent Office**

**Office européen des brevets**

(11) Publication number: **0 187 160 B1**

# EUROPEAN PATENT SPECIFICATION

(45) Date of publication of patent specification: **06.05.92**

(51) Int. Cl.⁵: **F16K 37/00**, F16K 3/30, A62C 37/36, A62C 37/50

(21) Application number: **85903174.2**

(22) Date of filing: **18.07.85**

(86) International application number: **PCT/AU85/00156**

(87) International publication number: **WO 86/00970 (13.02.86 86/04)**

(54) **SENSING OF FIRE INSTALLATION WATER VALVES BEING CLOSED.**

(30) Priority: **18.07.84 AU 6074/84**
**04.09.84 AU 6928/84**

(43) Date of publication of application:
**16.07.86 Bulletin 86/29**

(45) Publication of the grant of the patent:
**06.05.92 Bulletin 92/19**

(84) Designated Contracting States:
**AT BE CH DE FR GB IT LI LU NL SE**

(56) References cited:
| | |
|---|---|
| **EP-A- 0 051 961** | **DE-A- 2 146 456** |
| **DE-A- 3 331 013** | **FR-A- 1 586 381** |
| **FR-A- 2 055 912** | **GB-A- 895 957** |
| **GB-A- 1 364 030** | **SU-A- 500 407** |
| **US-A- 1 456 149** | **US-A- 1 952 397** |
| **US-A- 2 365 907** | **US-A- 3 522 596** |
| **US-A- 3 538 948** | **US-A- 3 719 203** |
| **US-A- 3 859 619** | **US-A- 4 093 000** |

(73) Proprietor: **MAGEE, Anthony James**
**1 Curdies Street**
**East Bentleigh Victoria 3204(AU)**

(72) Inventor: **MAGEE, Anthony James**
**1 Curdies Street**
**East Bentleigh Victoria 3204(AU)**

(74) Representative: **May, Hans Ulrich, Dr.**
**Patentanwalt Dr. H.U. May Thierschstrasse 27**
**W-8000 München 22(DE)**

## Description

The invention relates to a water supply valve for permitting an alarm to be given if said valve is closed.

In the art of fire alarm installations, such as sprinkler installations, it is normal that there be a plurality of gate valves or the like valves in the water supply lines to sprinklers or like extinguishing devices. During service of such fire installations, it is normal to close the valves and occasionally the valves are accidentally left closed which can have disastrous consequences if there is a fire.

Additionally, the valves can be accidentally closed by non-experienced personnel working at the fire alarm installation, i.e. the valves can be left partly closed and not fully open or they can be left full closed. Additionally ,the valves can be full closed with malicious intent i.e. to inhibit the flow of water should there be a fire.

Hitherto, it has been proposed, to sense when the valves are closed and to cause an alarm to be triggered alerting personnel to the danger. The valves have been sensed closed by inserting a magnetically operable switch within the valve chamber of the main body of the valve, so that it can sense when the gate of the valve is not in the fully open position.

A gate valve of this type having gate position indicating means is described for example in US-A-3 538 948. The gate member in the valve chamber of this valve is directly fitted with magnets, and a sensor is also within the valve chamber and therefore exposed to possibly aggressive fluid. In another embodiment of this known gate valve, the gate member is connected to an axial gate extension rod extending through a packing assembly into a switch carrier body which is external to the valve chamber and contains a read switch.

A problem with such installations, also with this gate valve is that the housing from which the valve is made must be drilled, so that a suitable sensing element can be placed into the valve chamber. Apart from the problem of sealing such opening to prevent the escape of water therefrom, there is a further problem that because such sensing elements are magnetically operable, they attract metal objects and it is well known that normal town water can often contain a large amount of metal particles. Accordingly, after a period of time, metal particles accumulate around the sensor, and even if the valve is shut, the presence of such magnetic particles prevents the sensors from giving an indication that the valve is closed. Additionally, said sensing elements are inherently difficult to install by reason of the requirement to bleed water from the system prior to installation and the subsequent requirement to effectively seal any holes which may be provided in the valve casings to enable the switches to be fitted.

Another type of a water supply valve for permitting an alarm to be given if said valve is closed is described in FR-A-2 055 912, and this water supply valve comprises the features of the pre-characterizing part of claim 1. This known water supply valve with gate position indicating means does not suffer from the inconveniences mentioned above, but it does not allow for easy retro-fitting of an existing water supply valve and requires a special new casing to hold the switches of the sensor, and such new casing cannot be fixed in a simple manner to an existing yoke. Moreover, the known non-contact type sensors of this installation could be "fooled" if foreign magnetic material is brought close to them, with malicious intent, to cause indication of an open position of the valve while it is in fact in the closed position. It is therefore an object of the invention to provide a water supply valve for permitting an alarm to be given if said valve is closed, said valve comprising the pre-characterizing features of claim 1, and such valve having a simple and reliable construction, also allowing for easy installation and retro-fitting of an existing water supply valve with a magnetic device for sensing the closed gate position of the valve, and moreover avoiding the possibility to "fool" the magnetic sensor with malicious intent so as to cause an indication "valve open" while the valve is in fact closed. The water supply valve of the invention should therefore also provide greater safety in operation.

The objects of the invention are realized by the water supply valve according to claim 1.

Advantageous embodiments of the invention are described in the dependent claims, and and by the method claim.

According to a further aspect of the present invention there may be provided a fire installation having a magnetically operable sensor fitted to a water supply gate valve thereof externally of the valve chamber, so as to in use, sense the valve gate being closed, whereby to permit an alarm indication to be given when the valve gate is closed.

Most preferably the sensor is a magnetically operable switch which does not require power to be supplied thereto to place said switch into a magnetically sensing condition. The switch is typically a reed switch which does not require any electrical power to place it in a magnetically sensing condition. Typically however, electrical supply will be required to sense opening and/or closing of the contacts.

In one embodiment the sensor senses the absence of some highly magnetic material from the sensor. In other words when the valve is open the highly magnetic material is in proximity to the sensor and when the valve is closed it is removed from the proximity of the sensor. This, in turn, causes the sensor to operate so that an alarm can be triggered.

In order that the invention can be more clearly ascertained several embodiments will now be described with reference to the accompanying drawings wherein;

Figure 1, is an end view of a typical gate valve which incorporates a sensor arrangement in accordance with the present invention;

Figure 2 is a sectional view along line 2-2 of Figure 1;

Figure 3 is a top perspective view of the sensor shown in Figure 2;

Figure 4 is a close-up side view of a further valve of different construction and incorporating a sensor in accordance with the present invention;

Figure 5 is an end view of the valve and sensor shown in Figure 4;

Figure 6 is a close-up side view of an even further valve of different construction incorporating a sensor in accordance with the present invention;

Figure 7 is a top perspective-partly exploded-view of a different sensor.

Figure 8 is a sectional plan view of the sensor shown in Figure 7 but where it is assembled together.

Figure 9 is a block schematic electrical circuit diagram of a typical fire alarm control installation incorporating features of the present invention.

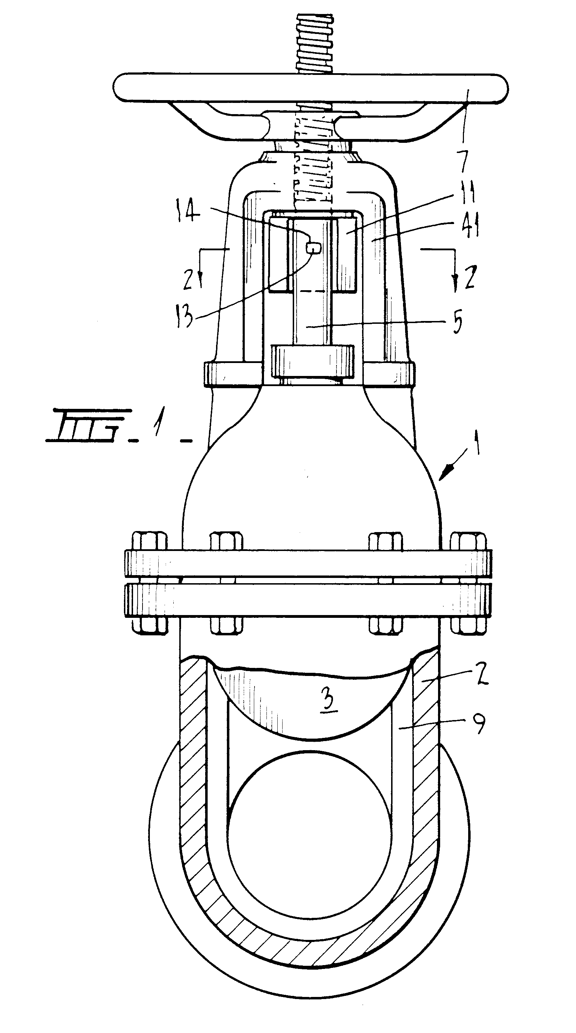

Referring now to figure 1, there is shown a gate valve 1 which has a valve gate 3 therein. The valve gate 3 connects with a threaded valve stem 5 of brass or bronze which, in turn, is operatively connected with a threaded handle 7. Rotation of the handle 7 causes the valve stem 5 to extend or retract to thereby move the gate 3 up and down within guides 9 in the valve body 2 to open and/or close the gate valve. In this embodiment, sensor 11 comprising a magnetic switch in the form of reed switch is attached to the outside of the valve housing, but at a position where it can sense movement of the valve stem 5. This, in turn, is sensing if the gate 3 is closed. The sensor 11 is such that it cooperates with a magnetic material 13 which is fitted within a hole 14 drilled into the valve stem 5. The sensor 11 is such that it is not put into an alarm condition by the presence of the magnetic material 13, but by the absence of the magnetic material 13. In this gate 3 open condition, the electrical contacts in the sensor 11 are open. When the gate 3 is closed, the contacts close thereby providing a signal which can cause an alarm signal to be generated. Typically the magnetic material 13 may be a block of mild steel which is inserted into the hole 14. Alternatively, it may be a permanent magnet which is inserted into the hole 14. The nature of the magnetic material depends on the nature of the sensor 11 but when the sensor 11 is a reed switch, it may have its own magnets associated with it, in which case the magnetic material can be a mild steel or some other highly ferromagnetic material. If the reed switch does not have magnets associated with it, then it may comprise a permanent magnet fitted in the hole 14.

In the embodiment shown in Figure 1, the magnetic material 13 comprises a permanent magnet. The sensor 11 includes a reed switch which does not have permanent magnets associated therewith to bias it into one of its operative states. The reed switch is such that the switch is normally open when the magnet 13 is in proximity thereof, but wherein the contacts close if the permanent magnet 13 is moved therefrom. In other words, when the gate 3 is moved to the closed position the magnetic material 13 moves away from the reed switch and causes a signal to be generated by the reed switch which can be sensed to, in turn, cause an alarm to be activated.

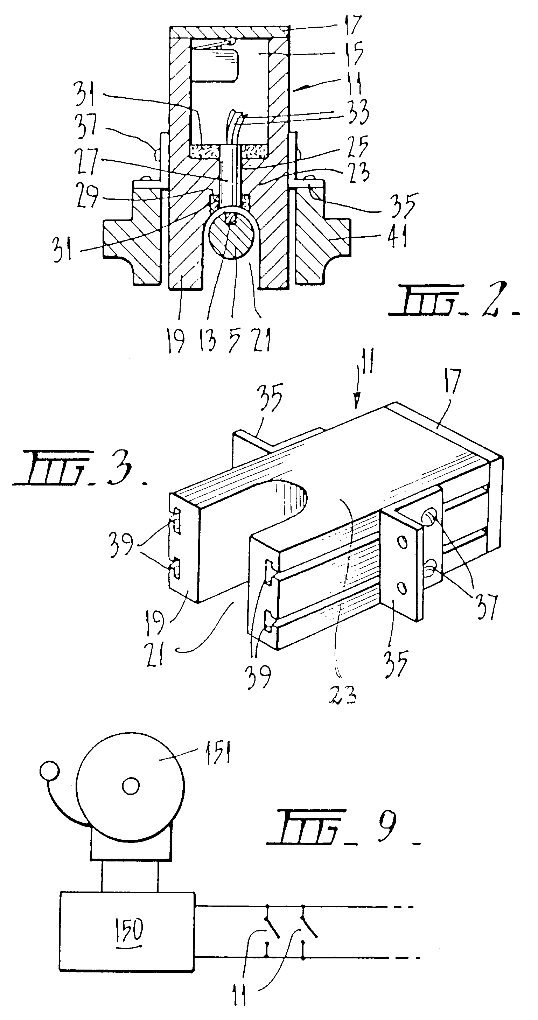

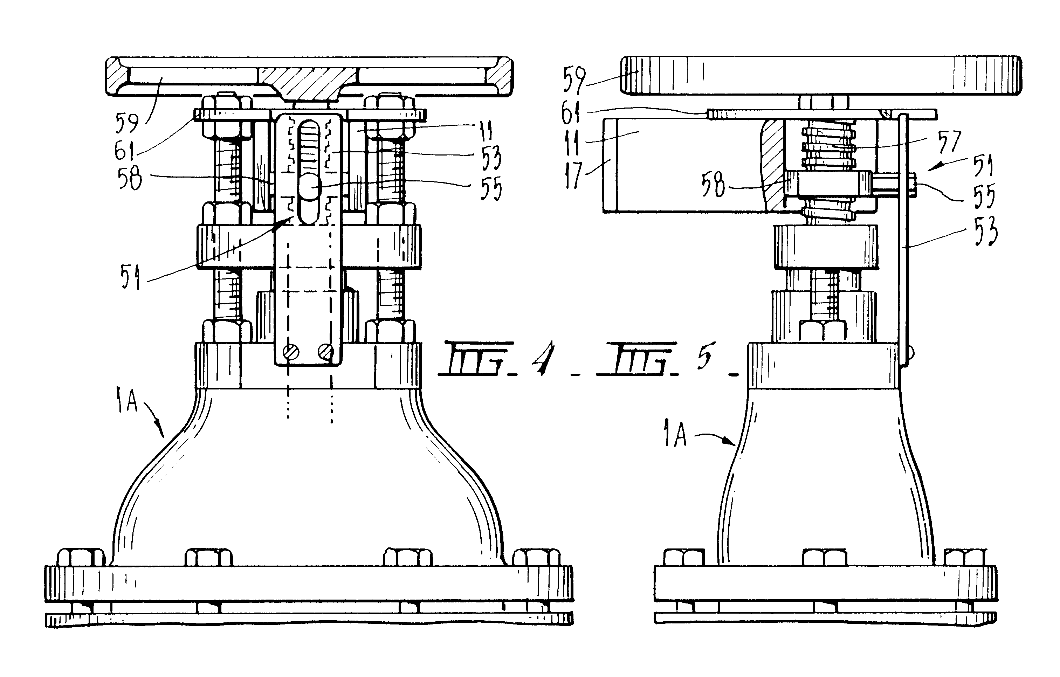

Referring now to Figures 2 and 3, there is shown a typical form of sensor for use in the valve shown in Figure 1. The sensor 11 comprises a cast iron casting 23 of generally hollow rectangular configuration. The casting has a hollow rear end 15 which is closed by a cast iron lid 17. The lid 17 is fastened to the casting body by means of screws (not shown). The forward end 19 of the sensor 11 has a U-shaped cut-out 21 produced therein. The purpose of the U-shaped cut-out will be explained in due course. A central portion of the sensor 11 has an aperture 25 therein in which is received a reed switch 27. Typically the reed switch 27 is encased in glass and the aperture 25 is of a diameter which enables the glass body of the reed switch 27 to neatly slide therein. The end of the aperture 25 adjacent the forward end 19 of the sensor 11 is provided with a larger diameter aperture 29. The larger diameter aperture 29 is in fact a bore of larger diameter than that of the aperture 25. The reed switch 27 is fitted within the aperture 25 so that one end of the reed switch 27 locates flush with the bottom surface of the U-shaped cut out 21. Epoxy resin is back filled into the hollow end 15 and into the larger diameter aperture 29. Thus the epoxy resin 31 suitably bonds and locates the reed switch 27 in the body of the sensor 11. Three leads 33 extend from the reed switch 27 and pass out through the hollow end 15 through a suitable aperture (not shown). The reed switch 27 has three leads so that normally open and or, normally closed contacts can be selected as required for particular installations. This will be explained later. The sensor 11 is mounted onto the valve 1 by means of angle brackets 35 which are bolted to the sides of the housing of the sensor 11, by means of bolts 37, the heads of which locate in T-shaped slots which extend along the sides of the housing of the sensor 11. The angle brackets 35 are positioned on the housing of the sensor 11 at a suitable location so that, in use, the housing of the sensor 11 can be mounted to parts 41 of the valve body. The position of mounting is such so that the end of the reed switch 27 which is at the forward end 19 of the sensor 11 is in very close proximity to the circumferential surface of the valve stem 5 of the valve 1. The diameter of the curved portion of the U-shaped cut-out 21 is marginally larger than the diameter of the valve stem 5. The effect of the U-shaped cut-out 21 in the body of the housing of the sensor 11 is to provide a bulky area of highly ferrous material surrounding the reed switch 27 and the valve stem 5. The reason for this is to avoid against attempting to hold the contacts of the reed switch in the non-alarm condition by placing a large magnet close to the sensor 11. In this case, the bulk of the body of the housing of the sensor 11 serves to contain any magnetic flux which would eminate from, such magnets. Thus, the reed switch 27 will still provide an alarm signal if the valve is moved to the closed position.

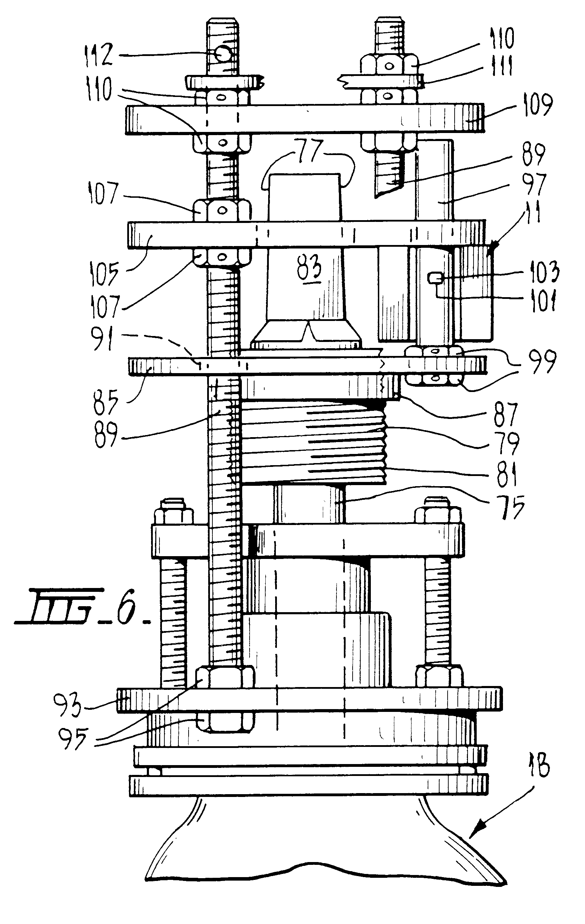

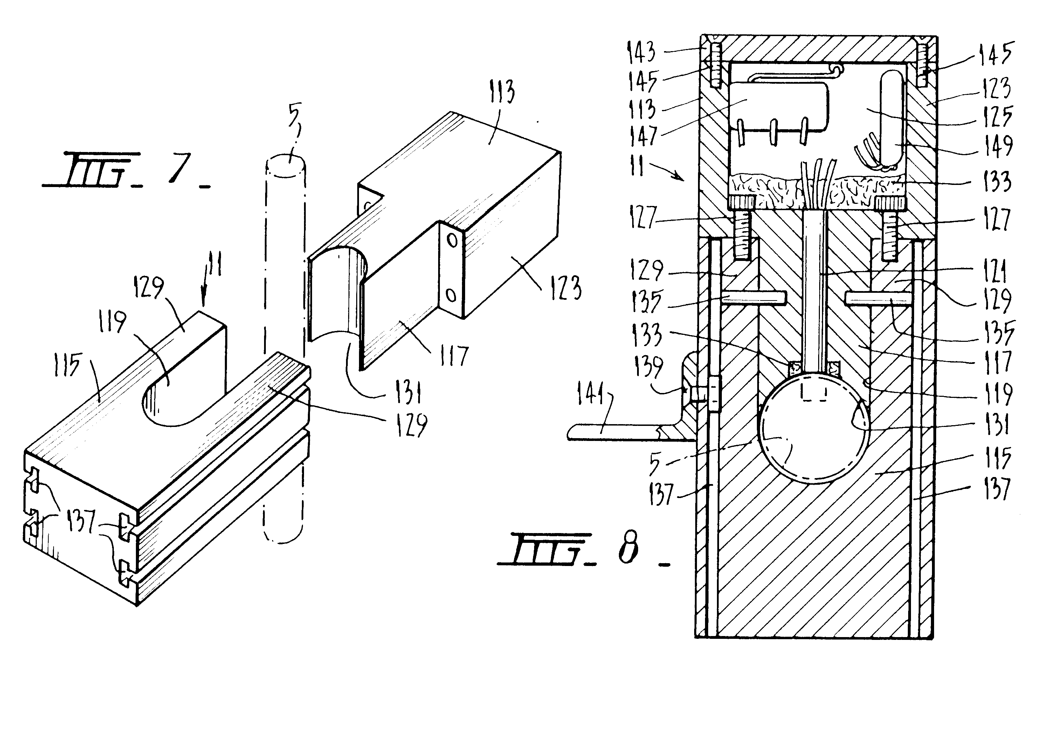

Figures 4 and 5 show a further alternative embodiment where a different type valve is used. Here, the valve body 1A has an indicator 51 attached thereto. The indicator 51 includes a scale 53 on which gate open and closed positions are marked. (These have not been shown in order that the figures will remain uncluttered).The scale 51 carries a pointer 55 which is operatively connected with the threaded brass stem 57 via a threaded collar 58 so as to slide up and down the stem 57 as the stem 57 is rotated by the handle 59 to open and/or close the gate in the body 1A. Thus, depending on the position of the gate within the body 1A then the pointer 55 will assume a position on the scale 53 to show the amount of opening and/or closing of the gate of the valve. In adapting the principles of the present invention to this type of gate valve, a sensor 11 is attached to the indicator 51 so as to sense the position of the collar 58 of the pointer 55. Accordingly, when the collar 58 of the pointer 55, which is a highly ferro magnetic material moves to the gate closed position, then the sensor 11 operates to provide an alarm signal. The collar is typically of cast iron or mild steel. In this embodiment the sensor 11 is of the same construction as in the previous embodiment except that it is biased by permanent magnets to be in the switch open condition when the collar 58 is in the gate open position. Thus, when the gate is closed, the collar 58 moves away from the sensor 11 and thus the reed switch therein trips to the closed position thereby providing a signal which can be used to trigger an alarm. The sensor 11 is fastened by means of bolts (not shown) to an upper flange part 61 of the mounting of the scale 53.

If desired the collar 58 could be of brass with a permanent magnetic insert in it. In this case there would be no need to bias the reed switch with permanent magnets to be in the normally open condition.

In the embodiment shown in figure 6 a different type of gate valve is shown where the valve body 1B does not have a rotatable handle thereon. Instead this valve has a rotatable valve stem 75 which has an upper extension 79 fitted thereto which, in turn, has a pair of opposed flats 77 at the top thereof. The pair of opposed flats 77 can be engaged by a spanner or key to cause rotation of the stem 75 to open and/or close the valve. In this embodiment, the valve stem 75 and the extension 79 are typically made from mild steel. A brass sleeve 81, which is externally screw threaded is fitted to the lower most end of the extension 79 and pinned thereto by a pin (not shown)

The sleeve 81 carries a screw threaded nonrotatable plate 85. The plate 85 has a central boss 87, which is internally screw-threaded so as to engage with the screw thread on the sleeve 81. The plate 85 is inhibited from it rotation by clamping rods 89 (only two of which are shown in the drawings) which pass through suitable openings 91 in the plate 85. The clamping rods 89 are screwthreaded and clamped to an upper part 93 at the top of the valve body 1B by means of a pair of nuts 95. Typically, there are four such clamping rods 89 around the circumferential extent of the top of the upper part 93 of the valve body 1B.

As the extension 79 is rotated, then the stem 75 is rotated and simultaneously the sleeve 81 of the extension 79 is also rotated. Because the plate 85 is screw-threaded to the sleeve 81, then the plate 85 moves upwardly and downwardly along the screw-threaded sleeve 81 of the extension 79.

The plate 85 carries a brass rod 97 at one side thereof. The brass rod is held to the plate 85 by a pair of nuts 99 which are screw-threaded onto the brass rod 97. The brass rod 97, in turn, has a hole 101 drilled therein transversely of the longitudinal axis thereof and the hole 101 carries a piece of highly magnetic material 103. Preferably the highly magnetic material 103 is a permanent magnet, but it may be some other material as discussed previously. Sensor 11 is placed to cooperate with the magnetic material 103 and in this connection the sensor 11 is carried on a plate 105 which, in turn, is held to the clamping rods 89 by nuts 107. The rod 97, in turn, passes through a suitable open (not shown) in the plate 105. Accordingly, as the plate 85 moves up and down the sleeve 81 of the upper part 83 as the valve stem 75 is rotated, then the rod 97 moves up and down therewith and displaces the magnetic material 103 from the sensor 11. This, in turn, causes operation of the switch contacts in the sensor 11 so that an alarm can be given if the valve gate moves to the closed position. The sensor 11 is of the same type as shown in the previous embodiments.

The rods 89 carry an annular plate 109 which is held thereto by locking nuts 110. The annular plate 109 is held above the top of the extension 79 and at a position such that it physically protects the sensor 11 but permits access to the extension 83 for operation of the valve.

A plate 111 extends between two clamping rods 89. The plate 111 is held to one of the rods 89 by one of the locking nuts 110 and to the other by means of a padlock (not shown) which passes through aperture 112 in that rod 89. All the nuts can be pinned by pins (not shown) so that the alignment of the sensor 11 with the rod 97 and magnet 103, will be easily upsettable.

In Figures 7 and 8, a different form of sensor 11 is shown. In this embodiment, the sensor 11 is made of two parts of cast iron which can be interconnected to completely surround the valve stem 5 or some other part of the valve which is integrally connected with the gate therein. In this embodiment the electrical switches are housed in a generally T-shaped part 113. The T-shaped part 113 co-operates with a shield part 115 by having the stem 117 located within a U-shaped cut-out 119. The parts 113 and 115 may be made of material other than cast iron such as brass and or plastics, but the choice of a highly magnetic material such as cast iron is desirable as it will act to contain the field of any magnets which are brought within proximity to the external surfaces of the parts 113 and 117 and thereby effectively provide a shield around the reed switch 121 which is mounted in the part 113. Accordingly, the reed switch 121 will be unlikely to be influenced by external magnetic fields which may be brought into proximity of the sensor 11, simply to try to hold the contacts of the reed switch 121 open by persons wishing to close the gate valve without causing an alarm signal to be given. If the parts 113 and 115 are made of other material such as plastic and or brass, then the physical size of the parts 113 and 115 will have to be substantial as it is simply the distance from the external surfaces of those parts 113 and 115 which renders the field of any external magnets relatively weak at the position of the reed switch 121.

The reed switch 121 is mounted within the stem 117 of the part 113 in a manner identical to that described in the previous embodiment. In the head 123 of part 113, there is a hollow recess 125 through which screws 127 can be passed to engage with the arms 129 of part 115, whereby to screw fasten the parts 113 and 115 together. Typically four screws are provided in the corners of the hollow recess 125. It can be observed that the lower most end of the stem 117 contains a semicircular face 131; this is shown clearly in both Figures 7 and 8. When the part 113 is assembled with the part 115, then a circular opening is provided which is of only slightly larger diameter than the external diameter of the shaft 5. Accordingly, the shaft can either rotate and or move upwardly and downwardly within that opening and move the magnetic material 13, 103 to or from proximity of the reed switch 121.

It can be seen that the forward end of the reed switch 121 comprises a back-fill of resin 133 and that the hollow recess 125 also contains a back-fill of resin 133. The back-fill of resin 133 in the hollow recess 125 covers the heads of the screws 127 to thereby conceal and make difficult the removal of part 113 from part 115. It can also be observed from Figure 8 that pins 135 extend inwardly of the sides of the sensor 11 and pass through the arms 129 into the stem 117. The pins 135 thereby provide an additional locking means to inhibit removal of parts 113 and 115 from each other. The pins 135 are inserted through the longitudinal slots 137 which extend along the side edges of part 115, which slots 137 are used for holding the heads and or nuts of captive screws and bolts 139, which are used to mount brackets 141 to the sensor 11 so that the sensor 11 can, in turn, be mounted to the valve at an appropriate operative position. The tops of the pins 135 are positioned inwardly relative to the innermost surfaces of the slots 137 and therefore the pins 135 do not interfere with sliding movement of the heads of the screws or bolts or nuts which slide within the slots 137.

The hollow recess 125 is closed by a lid 143 which, in turn, is screw-fastened to part 113 by screws 145. Mounted within the hollow recess 125 is a microswitch 147 which is arranged so that the moving arm thereof engages and is depressed by the lid 143 when the lid 143 fully closes the hollow recess 125. The microswitch 147 is provided as a security means to signal an alarm if the lid 143 is removed. A further proximity switch in the form of a reed switch 149 is also mounted within the hollow recess 125 and is provided to give an alarm signal if a magnetic field comes into proximity of the sensor 11. This would occur if a person were attempting to place a magnet near the sensor 11, maliciously wishing to "fool" the sensor 11 by attempting to hold the contacts of the reed switch 121 open when the valve gate is closed.

Each of the switches 121, 147 and 149 have three leads extending therefrom. These leads are respectively the common lead, the normally open lead, and the normally closed lead which connect with the respective contacts within those switches. The respective contacts of all of these three switches may be connected in parallel so that activation of any one of the switches will cause an alarm signal to be given. Depending on the circuit configuration required the switches may also be in series or may be connected in a combination of series and parallel configurations.

In the embodiment shown in Figures 7 and 8, it will be extremely difficult for a person to attempt to place a highly magnetic material down between the valve stem 5 and the surfaces 131 of part 117 to attempt to "fool" the reed switch 121 i.e. to maintain the contacts open even when the valve gate is closed.

By observing figure 9 it can be seen that a conventional sprinkler fire alarm control circuit 150 is operatively connected to a bell 151 or other suitable indicating means. The bell 151 may be at the actual location of the fire alarm installation and/or it may be at an actual fire brigade station. The switch contacts of the various sensors 11 are shown operatively connected in parallel and of the type which close to provide an electrical alarm signal. Alternatively the circuitry may be arranged to give an electrical alarm signal if the contacts of the sensors 11 open. In this alternative embodiment the contacts of the sensors 11 will be closed when the valve is fully open and would open when the valve gate moves to the closed position.

It should be appreciated that many modifications can be made to the present invention without departing from the scope thereof. For example the sensors need not be reed switches but any suitable magnetic switches. It is appreciated that with the present invention the actual switch is not within the valve chamber so as to be in the actual water, and hence there is a distinct advantage over the valves of the prior art which have been fitted with sensing means to sense the closed position.

**Claims**

1. A water supply valve (1) for permitting an alarm to be given if said valve is closed, comprising a valve stem (5) which moves in and out of said valve (1) as the latter is closed and opened, said valve stem (5) being provided with a magnetic material (13), said valve (1) further comprising a magnetically operable sensor (11) in a housing fixedly mounted relative to the body (2) of said valve (1) and externally of said body (2) at a position where it will cooperate with said magnetically sensible element (13) such that when said water supply valve (1) is open, no alarm will be given, but when said water supply valve (1) is closed, an alarm will be given, said magnetically operable sensor (11) being of the type which does not require power to be supplied thereto to place it into a magnetic sensing condition for use, and having an alarm (151) connected to said magnetically operable sensor (11, 121), characterized in that said magnetic material (13) is fitted in a hole (14) in said valve stem (5), and in that said housing (23, 113, 115) of said sensor (11) is of a highly magnetic material which will inhibit magnetic fields other than from said magnetic material (13) from influencing said sensor, and/or is shaped to be fitted about a rod like part (5, 97) of said valve (1), said rod like part (5, 97) being moveable as the valve (1 ) is opened and closed, the fitting being such as to inhibit the placing of foreign objects in proximity to said sensor (11) to attempt to "fool" said sensor from providing said alarm when the valve is closed.

2. A water supply valve according to claim 1, wherein said sensor (11) is a reed switch.

3. A water supply valve according to claim 1, wherein said housing (113, 115) completely surrounds said rod like part (85, 97).

4. A water supply valve according to claim 3, wherein said rod like part (5, 97) comprises said valve stem (5) of said valve (1).

5. A water supply valve according to any of claims 1 to 4 characterized in that a further sensor (149) is provided in said housing (113) for sensing if magnetic material is brought into proximity of said sensor (11) in an attempt to "fool" said sensor (11) from providing said alarm if said valve (1) is closed and connecting said further sensor (149) to said alarm (151) so that said alarm will signal an alarm condition in such circumstances.

6. A water supply valve according to any of claims 1 to 5 wherein said housing (113) includes a further sensor (147) for sensing if a lid (143) of said housing (113) is opened.

7. A water supply valve according to claims 5 or 6 wherein any of said further sensors (147, 149) is a reed switch.

8. A method of modifying a water supply valve (1) for a fire installation for permitting an alarm to be given if said water supply valve (1) is closed, said water supply valve (1) being of the type where the valve stem (5) thereof moves in and out of said water supply valve (1) as said water supply valve (1) is closed and opened, said method comprising:

(a) providing a hole (14) in the valve stem (5) of said water supply valve (1),

(b) fitting appropriate magnetic material (13) in said hole (14),

(c) fixedly mounting a magnetically operable sensor (11) as defined in any of claims 1 to 8 relative to the body (2) of said water supply valve (1) externally of the body (2) of said water supply valve (1) at a position where it will co-operate with said appropriate magnetic material (13) such that when said water supply valve (1) is open, no alarm will be given but when said water supply (1) is closed, an alarm will be given, said magnetically operable sensor (11) being of the type which does not require power to be supplied thereto to place it into a magnetic sensing condition for use,

(d) connecting an alarm (151) to said magnetically operable sensor (11).

9. Fire installation having a water supply gate valve with a magnetically operable sensor fitted thereto, according to any of claims 1 to 8, so as to in use sense the valve gate being closed, whereby to permit an alarm indication to be given when the valve gate is closed.

**Revendications**

1. Vanne d'alimentation d'eau (1) permettant de délivrer une alarme si ladite vanne est fermée, comprenant une tige de vanne (5) qui pénètre dans et sort de ladite vanne (1) lorsque cette dernière est fermée et ouverte, ladite tige de vanne (5) étant pourvue d'un matériau magnétique (13), ladite vanne (1) comprenant en outre un capteur (11) pouvant être actionné magnétiquement et situé dans un boîtier monté de façon fixe par rapport au corps (2) de ladite vanne (1) et à l'extérieur dudit corps (2) dans une position dans laquelle ce capteur coopère avec ledit élément sensiblement magnétiquement (13) de sorte que, lorsque ladite vanne d'alimentation en eau (1) est ouverte, aucune alarme n'est délivrée, mais que, lorsque ladite vanne d'alimentation en eau (1) est fermée, une alarme est délivrée, ledit capteur (11) pouvant être actionné magnétiquement étant du type qui ne nécessite pas qu'une énergie lui soit envoyée pour le placer dans une condition de détection magnétique pour son utilisation, et comportant une alarme (151) raccordée audit capteur (11,121) pouvant être actionné magnétiquement, caractérisée en ce que ledit matériau magnétique (13) est inséré dans un trou (14) ménagé dans ladite tige de vanne (5) et en ce que ledit boîtier (23,113,115) dudit capteur (11) est réalisé en un matériau hautement magnétique, qui empêche que des champs magnétiques autres que celui délivré par ledit matériau magnétique (13) n'influencent ledit capteur, et/ou est conformé de manière à être monté autour d'un élément en forme de tige (5,97) de ladite vanne (1), ledit élément en forme de tige (5,97) étant déplaçable lors de l'ouverture et de la fermeture de la vanne (1), le montage étant conçu de manière à empêcher que des objets étrangers soient disposés à proximité dudit capteur (11) pour essayer de "tromper" ledit capteur en l'empêchant de délivrer ladite alarme lorsque la vanne est fermée.

2. Vanne d'alimentation en eau selon la revendication 1, dans laquelle ledit capteur (11) est un interrupteur à lame.

3. Dispositif d'alimentation en eau selon la revendication 1, dans lequel ledit boîtier (113,115) entoure complètement ledit élément en forme de tige (85,97).

4. Vanne d'alimentation en eau selon la revendication 3, dans laquelle ledit élément en forme de tige (5,97) forme ladite tige (5) de ladite vanne (1).

5. Vanne d'alimentation en eau selon l'une quelconque des revendications 1 à 4, caractérisée en ce qu'un autre capteur (149) est prévu dans ledit boîtier (113) pour déterminer si le matériau magnétique est placé à proximité dudit capteur (11) en vue de "tromper" ce dernier pour l'empêcher de délivrer une alarme si ladite vanne (1) est fermée, et raccorder ledit autre capteur (149) à ladite alarme (151) pour que cette dernière signale une condition d'alarme dans de telles conditions.

6. Vanne d'alimentation en eau selon l'une quelconque des revendications 1 à 5, dans laquelle ledit boîtier (113) comprend un autre capteur (147) déterminant si un couvercle (143) dudit boîtier (113) est ouvert.

7. Vanne d'alimentation en eau selon la revendication 5 ou 6, dans laquelle l'un quelconque desdits autres capteurs (147,149) est un interrupteur à lame.

8. Procédé pour modifier une vanne d'alimentation en eau (1) pour une installation de protection contre l'incendie de manière à permettre la délivrance d'une alarme si ladite vanne d'alimentation en eau (1) est fermée, ladite vanne d'alimentation en eau (1) étant du type dans lequel sa tige (5) pénètre dans et sort de ladite vanne d'alimentation en eau (1) lors de la fermeture et de l'ouverture de cette dernière, ledit procédé consistant a :

(a) ménager un trou (14) dans la tige (5) de ladite vanne d'alimentation en eau (1),

(b) insérer un matériau magnétique approprié (13) dans ledit trou (14),

(c) monter de façon fixe un capteur (11) pouvant être actionné magnétiquement, tel que défini dans l'une quelconque des revendications 1 à 7 par rapport au corps (2) de ladite vanne d'alimentation en eau (1), à l'extérieur du corps (2) de cette vanne, dans une position dans laquelle ce capteur coopère avec ledit matériau magnétique approprié (13) de telle sorte que, lorsque ladite vanne d'alimentation en eau (1) est ouverte, aucune alarme n'est délivrée, mais que, lorsque ladite vanne d'alimentation en eau (1) est fermée, une alarme est délivrée, ledit capteur (11) pouvant être actionné magnétiquement étant du type qui ne requiert pas qu'une énergie lui soit envoyée pour le placer dans une condition de détection magnétique pour l'utilisation,

(d) raccorder une alarme (151) audit capteur (11) pouvant être actionné magnétiquement.

9. Installation de protection contre l'incendie comportant une vanne à obturateur de délivrance d'eau sur laquelle est monté un capteur pouvant être actionné magnétiquement, selon l'une quelconque des revendications 1 à 8, de manière à détecter, en fonctionnement, l'état fermé de l'obturateur de la vanne, ce qui permet la délivrance d'une indication d'alarme lorsque l'obturateur de la vanne est fermé.

**Patentansprüche**

1. Wasserzuleitungsventil (1), das die Auslösug eines Alarms ermöglicht, wenn das Ventil geschlossen ist, mit einer Schieberspindel (5), die sich beim Schließen und Öffnen des Ventils (1) in dieses hinein und aus diesem heraus bewegt, wobei die Ventilspindel (5) mit einem magnetischen Material (13) versehen ist und das Ventil (1) außerdem einen magnetisch betreibbaren Fühler (11) in einem Gehäuse aufweist, das bezüglich des Schiebergehäuses (2) des Ventils (1) und außerhalb des Schiebergehäuses (2) in einer Stellung fest montiert ist, wo er mit dem magnetisch erfaßbaren Element (13) zusammenwirkt, so daß bei geöffnetem Wasserzuleitungsventil (1) kein Alarm gegeben wird, jedoch beim Schließen des Wasserzuleitungsventils (1) ein Alarm gegeben wird, wobei der magnetisch betreibbare Fühler von einem Typ ist, welcher keine Energiezufuhr erfordert, um ihn zum Gebrauch in einen auf Magnetkräfte ansprechenden Zustand zu bringen, und mit einem Alarm (151), der mit dem magnetisch betreibbaren Fühler (11, 121) verbunden ist, dadurch gekennzeichnet, daß das magnetische Material (13) in ein Loch (14) der Schieberspindel (5) eingesetzt ist und daß das Gehäuse (23, 113, 115) des Fühlers (11) aus einem stark magnetischen Material ist, welches verhindert, daß andere magnetische Felder als vom magnetischen Material (13) den Fühler beeinflussen, und/oder so geformt ist, daß es um einen schaftartigen Teil (97) des Ventils (1) angebracht werden kann, wobei der schaftartige Teil (5, 97) mit dem Öffnen und Schließen des Ventils (1) bewegbar ist und die Anbringung derart ist, daß sie verhindert, Fremdobjekte in die Nähe des Fühlers (11) zu bringen, um zu versuchen, den Fühler zu "täuschen", so daß er keinen Alarm gibt, wenn das Ventil geschlossen ist.

2. Wasserzuleitungsventil nach Anspruch 1, worin der Fühler (11) ein Reed-Schalter ist.

3. Wasserzuleitungsventil nach Anspruch 21, worin das Gehäuse (113, 115) den schaftartigen Teil (85, 97) vollständig umgibt.

4. Wasserzuleitungsventil nach Anspruch 3, worin der schaftartige Teil (5, 97) die Schieberspindel (5) des Ventils (1) aufweist.

5. Wasserzuleitungsventil nach einem der Ansprüche 1 bis 4, dadurch gekennzeichnet, daß ein weiterer Fühler (149) in dem Gehäuse (113) vorgesehen ist, um zu erkennen, wenn magnetisches Material in die Nähe des Fühlers (11) in der Absicht gebracht wird, den Fühler (11) zu "täuschen", so daß er den Alarm nicht gibt, wenn das Ventil (1) geschlossen ist, und der weitere Fühler (141) mit dem Alarm (151) verbunden wird, so daß dieser Alarm unter solchen Umständen einen Alarmzustand anzeigt.

6. Wasserzuleitungsventil nach einem der Ansprüche 1 bis 5, worin das Gehäuse (113) eine weiteren Fühler (147) einschließt, um zu erkennen, wenn ein Deckel (143) des Gehäuses (113) geöffnet wird.

7. Wasserzuleitungsventil nach den Ansprüchen 5 oder 6, worin irgendeiner der weiteren Fühler (147, 149) ein Reed-Schalter ist.

8. Verfahren zur Abänderung eines Wasserzuleitungsventils (1) für eine Feuerlöschanlage, so daß ein Alarm gegeben wird, wenn das Wasserzuleitungsventil (1) geschlossen ist, wobei das Wasserzuleitungsventil (1) von dem Typ ist, wo sich seine Schieberspindel (5) beim Schließen und Öffnen des Wasserzuleitungsventils (1) in dieses hinein und aus diesem heraus bewegt und das Verfahren folgende Stufen umfaßt:

    a) ein Loch (14) wird in der Schieberspindel (5) des Wasserzuleitungsventils (1) hergestellt;

    b) geeignetes magnetisches Material (13) wird in das Loch (14) eingesetzt;

    c) ein magnetisch betreibbarer Fühler (11), wie in irgendeinem der Ansprüche 1 bis 8 definiert, wird bezüglich des Schiebergehäuses (2) des Wasserzuleitungsventils (1) außerhalb des Schiebergehäuses (2) des Wasserzuleitungsventils (1) in einer Stellung fest montiert, wo er mit dem geeigneten magnetischen Material (13) zusammenwirkt, so daß, wenn das Wasserzuleitungsventil (1) geöffnet ist, kein Alarm gegeben wird, jedoch wenn das Wasserzuleitungsventil (1) geschlossen ist, ein Alarm gegeben wird, wobei der magnetisch betreibbare Fühler (11) von dem Typ ist, welcher keine Energiezufuhr erfordert, um ihn zum Gebrauch in einen auf Magnetfelder ansprechenden Zustand zu bringen,

    d) ein Alarm (151) wird mit dem magnetisch betreibbaren Fühler (11) verbunden.

9. Feuerlöschanlage mit einem Wasserzuleitungsschieberventil, das mit einem daran angepaßten magnetisch betreibbaren Fühler nach einem der Ansprüche 1 bis 8 ausgerüstet ist, so daß im Betrieb erkannt wird, wenn der Ventilschieber geschlossen wird, wodurch eine Alarmanzeige gegeben werden kann, wenn der Ventilschieber geschlossen ist.

EP 0 187 160 B1

FIG. 1

10

FIG. 2.

FIG. 3.

FIG. 9.

FIG. 4    FIG. 5

EP 0 187 160 B1

FIG_6.

FIG_7_

FIG_8_

EP 0 187 160 B1